(19) **Europäisches Patentamt**
**European Patent Office**
**Office européen des brevets**

(11) Veröffentlichungsnummer: **0 177 770**
**A1**

(12) # EUROPÄISCHE PATENTANMELDUNG

(21) Anmeldenummer: 85111295.3

(22) Anmeldetag: 06.09.85

(51) Int. Cl.⁴: **H02P 5/178** , H02P 7/00

(30) Priorität: 14.09.84 DE 3433888

(43) Veröffentlichungstag der Anmeldung:
16.04.86 Patentblatt 86/16

(84) Benannte Vertragsstaaten:
DE FR GB IT NL SE

(71) Anmelder: **Siemens Aktiengesellschaft**
**Berlin und München Wittelsbacherplatz 2**
**D-8000 München 2(DE)**

(72) Erfinder: **Reick, Horst, Dipl.-Ing.**
**Holzleite 4**
**D-8521 Effeltrich(DE)**
Erfinder: **Kratz, Gerhard**
**Adelsgasse 17**
**D-8551 Heroldsbach(DE)**

(54) Antriebsanordnung für elektrisch angetriebene Fahrzeuge.

(57) Der Anker und die Feldwicklung eines Gleichstrommotors, z.B. für einen Windenantrieb oder ein Elektroauto, sind über je ein Halbleiterstellglied (1, 40, 41) von einer Gleichspannungsquelle (3) gespeist. Das Halbleiterstellglied (1) besteht aus zwei gleichsinnig parallelgeschalteten Halbleiterventilen (6a, 7a), die ausgangsseitig auf einen Saugtransformator (4) mit Mittenanzapfung geschaltet sind. Die Mittenanzapfung (5) ist mit den Enden eines dritten Saugtransformators 37, dessen Mittenanzapfung 38 nu einem Pol des Gleichstrommotors verbunden ist. Zur Drehzahlregelung dient eine Recheneinrichtung (14), der Drehzahl-Sollwerte und von Meßfühlern Istwerte der Drehzahl, Ankerspannung, Ankertemperatur, des Erregerstromes, der Erregerspannung, Erregertemperatur sowie der Spannung und des Stromes der Gleichspannungsquelle (3) zugeführt werden. Aus diesen Werten und gegebenenfalls gespeicherten Werten werden in der Recheneinrichtung (14) für die jeweils über den Sollwertgeber (15) vorgegebene Drehzahl Steuerwerte errechnet, bei denen sich ein Minimum der elektrischen Anlagenverluste bei kleiner Stromwelligkeit und hoher Betriebssicherheit ergibt.

EP 0 177 770 A1

Antriebsanordnung für elektrisch angetriebene Fahrzeuge

Die Erfindung bezieht sich auf eine Antriebsanordnung für elektrisch angetriebene Fahrzeuge, bei der der Anker wenigstens eines Gleichstrommotors und die zugeordnete Feldwicklung über je ein Halbleiterstellglied mit parallelen Halbleiterventilen von einer Gleichspannungsquelle gespeist werden und zur Drehzahlsteuerung eine Drehzahlregeleinrichtung und eine Erregerstromregeleinrichtung dienen, wobei der Drehzahlregeleinrichtung von einem Drehzahlgeber Sollwerte und von Meßfühlern Istwerte proportional den Ankerströmen, der Ankerspannung und der Drehzahl des Gleichstommotors zugeführt werden und an die Erregerstromregeleinrichtung von Meßfühlern Istwerte proportional dem Erregerstrom und der Ankerspannung gegeben werden.

Eine Antriebsanordnung dieser Art ist aus der Siemens-Werbeschrift "Antriebstechnik mit System", Bestell-Nr. E 319/1126, insbesondere Seite 37, Bild 2 und Seite 53, Bild 5 bekannt. Bei der aus Bild 2 bekannten Regelung einer Gleichstrommaschine für einen Haspelantrieb ist dem Drehzahlregler eine Ankerstromregelung unterlagert. Im Feldschwächbereich wird der Erregerstrom abhängig von der Ankerspannung geführt. Zur Gewährleistung eines gleichbleibenden Moments ist dem Drehzahlregler ein Drehmomentrechner zugeordnet, von dem der Ausgang des Drehzahlreglers einen Drehmomenten-Sollwert erhält.

Im Prinzip ähnliche Regelungen sind auch bei anderen Antrieben, z.B. Aufzugantrieben, bekannt (siehe Seite 53, Bild 5).

Aus der GB-A-2040085 ist eine Steuereinrichtung für einen aus einer Batterie gespeisten fremderregten Gleichstrommotor bekannt, bei der über ein Pedal ein Beschleunigungssignal an eine Befehlseinrichtung gegeben wird, die einen Ankerstromregler und einen Erregerstromregler ansteuert. Um die Betriebssicherheit zu erhöhen, werden die Ankertemperatur und die Spannung der Batterie überwacht, wobei eine Temperaturerhöhung des Ankers oder eine Spannungserhöhung der Batterie auf den Ankerstromsollwert im Sinne einer Verringerung des Ankerstromes auf die Ankerstromregeleinrichtung zur Einwirkung gebracht wird. Dem Ankerstromregler ist im Ankerstrompfad ein Thyristorsteller mit Löscheinrichtung und dem Erregerstromregler im Erregerstrompfad ein Transistor als Stellglied zugeordnet. Parallel zum Anker und zu der Feldwicklung ist jeweils eine Freilaufdiode geschaltet. Die Sollwerte für den Ankerstrom und Erregerstromregler werden über Funktionsgeneratoren geführt, um einen Sollwertsignalverlauf nach vorgegebenen Kennlinien zu erhalten. Dadurch können die Verluste klein gehalten werden. Nach einer abgewandelten Ausführungsform sind der Anker- und Erregerstromregler als Mikroprozessor ausgebildet, wobei dem Mikroprozessor ein Beschleunigungssollwert und die vorgenannten Istwerte zugeleitet werden. Hierbei ergeben sich besonders im Teillastbereich relativ große Verluste im Ankerstromsteller infolge großer Ankerstromwelligkeit und stromunabhängiger Schaltverluste im Thyristor-Ankerstromsteller und demzufolge auch größere Verluste in der Ankerwicklung.

In der US-A-4363999 ist ein Allradantrieb und Bremssystem für Elektrofahrzeuge beschrieben, bei dem die Ankerkreise und Erregerkreise von kommutatorlosen Drehfeldmotoren über einen Mikroprozessor gesteuert werden, dem von Meßfühlern Istwerte proportional der Geschwindigkeit und der Leistung sowie Sollwerte proportional der Beschleunigung und Verzögerung zugeführt werden. Von Meßfühlern werden dem Mikroprozessor ferner Istwerte pro portional den Spannungen und den Strömen der Batterien, proportional der Motordrehzahl, der Ankerspannung und der Ankertemperatur zugeführt. Im Mikroprozessor werden für die über den Sollwertgeber vorgegebene Beschleunigung Steuerwerte gebildet, bei denen sich ein größerer Wirkungsgrad als bei anderen bekannten Fahrzeugantrieben ergibt, und zwar Steuerwerte für die Reihenschaltung, Serien-Parallelschaltung oder Parallelschaltung der Batterien und der Erregerwicklungen. Diese Steuerwerte des Mikroprozessors werden entsprechenden Schaltvorrichtungen zugeführt. Jedem Motor ist auf der Ständerseite ein gesonderter Wechselrichter vorgeschaltet, wobei die Wechselrichter in Reihe oder parallel an die Fahrzeugsammelschiene geschaltet werden können. Hierbei ergibt sich ein sehr großer Aufwand für die als sechspulsige Wechselrichter ausgebildeten Stromrichter und für die Schaltelemente. Ferner ist kein kontinuierlicher Übergang beim Umschalten der Erregung und der Wechselrichter gegeben. Die Umschaltung ist daher nicht ruckfrei.

Die GB-A-2056709 befaßt sich mit einem Verfahren und einer Vorrichtung zur Steuerung eines Reihenschlußmotors, der über einen Ankerstromsteller aus einer Batterie betrieben wird. Zur Bestimmung und Vorgabe der Geschwindigkeit und der Drehzahl des Motors werden das Impulsabstandsverhältnis des gepulsten Stromes für den Motor und die Erregung entsprechend gesteuert. Unter Verwendung von in einem Speicher gespeicherten Werten wird ein gefordertes Drehmoment bei einer zugehörigen Geschwindigkeit durch Änderung der Erregung des Impulsabstandsverhältnisses so eingeregelt, daß die Energieverluste auf einem geringen Wert gehalten werden können. Bei dieser Ausführung ist der Reihenschlußfeldwicklung ein veränderbarer Shunt parallelgeschaltet, der im Feldschwächbereich zu hohen Verlusten führt.

Zur Abführung der in den Halbleiterventilen und in den Gleichstrommotoren auftretenden Wärmeverluste werden die Halbleiter auf Kühlkörpern angeordnet, die durch natürliche Luftströmung oder von einem durch einen Motor angetriebenen Ventilator oder durch einen Flüssigkeitsumlauf gekühlt werden. Die Gleichstrommotoren sind ebenfalls luft- oder flüssigkeitsgekühlt. Dabei sind zur Luftkühlung dienende Ventilatoren meist mit den Gleichstrommotoren gekuppelt.

Der Erfindung liegt die Aufgabe zugrunde, bei einer Antriebsanordnung der eingangs genannten Art die elektrischen Verluste der Anlage gegenüber den bekannten Ausführungen bei kleiner Ankerstromwelligkeit mit einfachen Mitteln weiter zu verkleinern und eine hohe Betriebssicherheit zu gewährleisten.

Diese Aufgabe wird erfindungsgemäß dadurch gelöst, daß die Drehzahlregeleinrichtung und die Erregerstromregeleinrichtung als Recheneinrichtung ausgebildet sind und dem ersten Rechner

a) von Meßfühlern Istwerte proportional den Spannungen und/oder Strömen der Gleichspannungsquelle sowie

b) von Meßfühlern Istwerte proportional den Ankertemperaturen zugeführt werden und an den zweiten Rechner

c) von Meßfühlern Istwerte proportional den Erregerspannungen und Erregertemperaturen gegeben werden, daß in den Rechnern aus den zugeführten und gegebenenfalls gespeicherten Werten für die jeweils über den Sollwertgeber vorgegebene Drehzahl Steuerwerte errechnet werden, bei denen sich ein Minimum der elektrischen Anlagenverluste ergibt, und zwar

d) Steuerwerte für die Zu- und Abschaltung von parallelen Halbleiterventilen, zumindest in Abhängigkeit von der jeweils geforderten Leistung und Drehzahl,

e) Steuerwerte für die Einstellung der Ankerspannung in Abhängigkeit von der jeweils geforderten Leistung, der Drehzahl und dem Erregerstrom,

f) Steuerwerte für die Einstellung der Erregerströme in Abhängigkeit von der Ankerspannung und/oder dem Ankerstrom, von der geforderten Leistung sowie Drehzahl und

g) Steuerwerte für die Kühlung der Halbleiterventile und des Gleichstrommotors in Abhängigkeit von den Ankerströmen bzw. den Erregerströmen

und daß diese Steuerwerte Stellgliedern und Schaltvorrichtungen zugeführt werden, daß zwei gleichsinnig parallelgeschaltete Halbleiterventile des Halbleiterstellgliedes ausgangsseitig auf einen induktionsarmen Saugtransformator mit Mittenanzapfung geschaltet sind, wobei der eingangsseitige Verbindungspunkt der Halbleiterventile mit einem Pol der Gleichspannungsquelle und die Mittenanzapfung mit einem Pol des Ankers des Gleichstrommotors verbunden ist, die Verbindungsleitungen der Halbleiterventile mit dem Saugtransformator jeweils über eine Freilaufdiode an den anderen Pol des Ankers angeschlossen sind, daß parallel zum Halbleiterstellglied ein weiteres gleich ausgebildetes Halbleiterstellglied angeordnet ist und die Mittenanzapfung des Saugtransformators der beiden Halbleiterstellglieder mit den Enden eines dritten induktionsarmen Saugtransformators mit Mittenanzapfung verbunden ist, wobei die Mittenanzapfung des dritten Saugtransformators an einen Pol des Ankers angeschlossen ist und daß die Recheneinrichtung derart ausgebildet ist, daß sie für die Halbleiterventile Taktfrequenzsignale jeweils mit gleichem Aussteuergrad erzeugt, die aber für die beiden parallelen Halbleiterstellglieder um 90° elektrisch gegeneinander versetzt sind.

Auf diese Weise wird durch Herabsetzung der elektrischen Verluste eine erhebliche Steigerung des Wirkungsgrades gegenüber den bekannten Ausführungen erzielt, da auch die Stromwelligkeit (Stromschwingungsbreite) des Ankerstromes erheblich reduziert werden kann. Ferner ist eine kontinuierliche Verstellung des Ankerstromes und damit ein ruckfreies Umschalten möglich. Eine weitere Verlustverringerung ist im Teillastbereich bei kleinen Strömen dadurch möglich, daß eine Schalteinrichtung vorgesehen ist, die bei Abschalten oder Ausfall eines Stellgliedes den Antrieb automatisch auf den noch verbleibenden Halbleitersteller schaltet.

Ausführungsbeispiele der Erfindung sind in der Zeichnung schematisch dargestellt. Es zeigt:

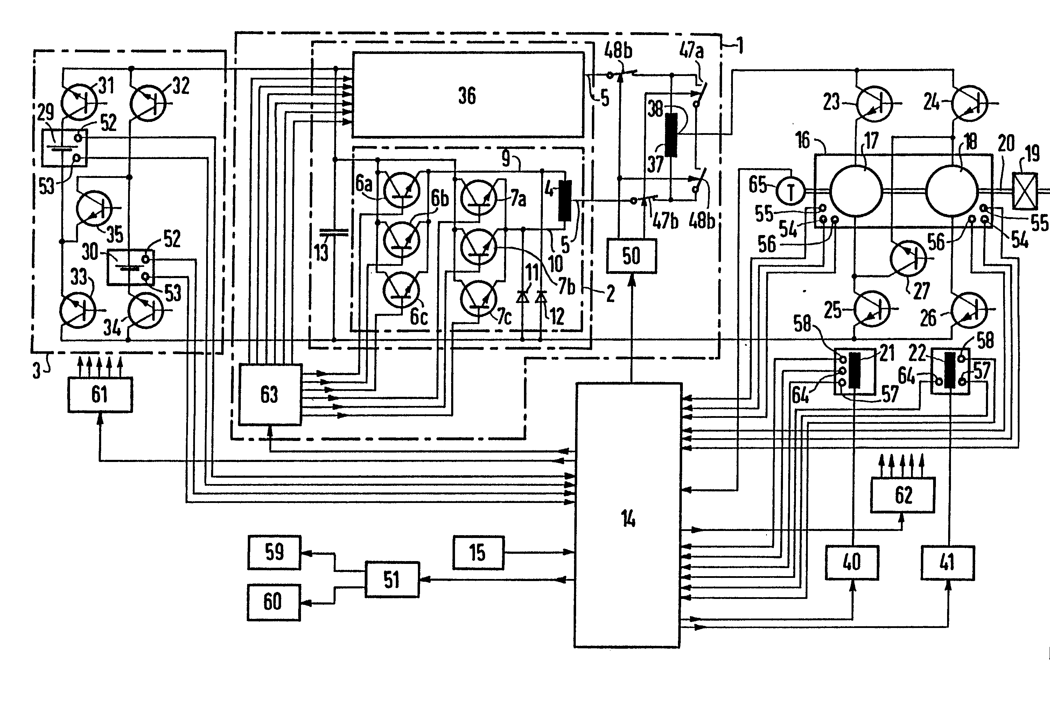

Fig. 1 eine Anordnung zum verlust- und geräuscharmen Betrieb eines Antriebs mit fremderregtem Gleichstrommotor für ein Elektroauto oder Hebezeug.

In Fig. 1 ist über ein Halbleiterstellglied 1 ein Antrieb 16 mit zwei auf einer Welle 20 angeordneten Gleichstrommotoren an eine Gleichspannungsquelle 3 angeschlossen, der ein Stützkondensator 13 parallelgeschaltet ist. Das Halbleiterstellglied 1 für den Gleichstrommotor-Antrieb 16 ist aus der Parallelschaltung steuerbarer Halbleiterventile 6a, 7a gebildet. Der ausgangsseitige Verbindungspunkt 9 der Halbleiterventile 6a ist über eine Freilaufdiode 12 und der Verbindungspunkt 10 über eine Freilaufdiode 11 an den Minuspol der Gleichspannungsquelle 3 angeschlossen. Die Halbleiterventile 6a, 7a erhalten ihre Steuersignale von einer Recheneinrichtung 14, die einzelne Rechner enthalten kann und von einem Drehzahl-Sollwertgeber 15 ansteuerbar ist.

Der Antrieb besitzt zwei Anker 17, 18, denen Erregerwicklungen 21, 22 zugeordnet sind, welche über Erregerstromstellglieder 40, 41 von der Recheneinrichtung 14 beaufschlagt werden. Die Anker 17, 18 sind über Halbleiterschalter 23 bis 27 und das als Ankerstromsteller ausgebildete Halbleiterstellglied 1 aus der Gleichspannungsquelle 3 gespeist. Zur Drehzahlsteuerung werden die Anker 17, 18 mittels des Drehzahl-Sollwertgebers 15 über die von dem Rechner 14 angesteuerte Schaltvorrichtung 62 und die Halbleiterschalter 23 bis 27 von Serien- auf Parallelschaltung und umgekehrt umgeschaltet. Zur Kühlung des Motors 16 ist jedem Anker 17, 18 eine Kühleinrichtung 59, 60 zugeordnet. Diese Kühleinrichtungen, die in der Drehzahl steuerbare Motoren enthalten, sind von dem Rechner 14 über ein Stellglied 51 ansteuerbar, wobei die Kühlmenge von der Recheneinrichtung 14 bestimmt wird.

Dem Rechner 14 werden von Meßfühlern 52, 53 Signale über Spannungen und/oder Ströme der Gleichspannungsquelle zugeführt, ferner von Meßfühlern 54, 55, 56 Signale zum Erfassen der Ankerströme, der Ankerspannungen und der Ankertemperaturen. Darüberhinaus werden an den Rechner 14 von Meßfühlern 57, 58, 64 Signale zum Erfassen der Erregerströme, Erregerspannungen und Erregertemperaturen gegeben. Von einem Meßfühler 65 werden Signale zum Erfassen der Drehzahl des Gleichstrommotors an den Rechner 14 geleitet.

Die zur Regelung des Antriebs ausgebildete Recheneinrichtung 14 errechnet aus den von den Meßfühlern 52 bis 59 und 64, 65 zugeführten Werten und aus in der Recheneinrichtung 14 gespeicherten Werten für die jeweils über den Sollwertgeber 15 vorgegebene Drehzahl Steuerwerte, bei denen sich eine Minimierung der elektrischen Anlagenverluste ergibt und zwar errechnet der Rechner 14 Steuerwerte für Zu- und Abschaltung von parallelen Halbleiterventilen 6a bis 6c in Abhängigkeit von der jeweils geforderten Leistung und Drehzahl und Steuerwerte für die Einstellung der Ankerspannung in Abhängigkeit von der jeweils geforderten Leistung und Drehzahl. Der Rechner 14 errechnet Steuerwerte für die Einstellung der Erregerströme in Abhängigkeit von der Ankerspannung und/oder dem Ankerstrom sowie von der geforderten Leistung und Drehzahl.

In der Recheneinrichtung 14 sind Werte über die Gleichspannungsquelle 3, insbesondere die Verlustkennlinie und Leistungskennlinien, Werte über den Gleichstrommotor, insbesondere Erregerkennlinien, Leistungskennlinien und Kennlinien für die Kühlung und ferner die Lastkennlinie gespeichert. Von den in der Recheneinrichtung 14 errechneten Steuerwerten werden darüberhinaus entsprechende Steuerwerte über den Rechner .14 einer Schaltvorrichtung 62 für die stromlose Ankerumschaltung und über den Rechner 14 einem als Schaltvorrichtung 63 dienenden Steuersatz für die Zu- bzw. Abschaltung von Halbleiterventilen 6a bis 6c zugeführt. Ferner werden in der Recheneinrichtung 14 errechnete Steuerwerte für die Aussteuerung des als Stellglied dienenden Halbleiterstellgliedes 1 über den Rechner 14 der als Steuersatz dienenden Schaltvorrichtung 63 zugeleitet. Darüberhinaus erhalten die Erregerstrom-Stellglieder 40, 41 im Rechner 14 errechnete Steuerwerte für die Einstellung der Erregung und das Stellglied 51 erhält für die Kühleinrichtung 59, 60 Steuerwerte für die Kühlung der Anker über den Rechner 14 im Sinne einer Minimierung der elektrischen Anlagenverluste.

Über die Stellglieder 1, 40, 41, 51 und die Schaltvorrichtungen 62, 63 werden bei der geforderten Drehzahl Ankerspannungen, Erregerspannungen und Kühlmengen in einem durch die Leistungsgrenzen und die Betriebsspannung vorgegebenen Bereich auf den jeweils optimalen Arbeitspunkt gestellt, d.h. die Recheneinrichtung 14 bestimmt die Steuerwerte, bei denen sich die geringsten elektrischen Verluste der Anlage ergeben. Durch die Vorgabe eines von der Drehzahl, vom Ankerstrom, Erregerstrom und Ankertemperatur sowie Erregertemperatur ab hängigen Steuerwertes an das Stellglied 51 für die Kühleinrichtungen 59, 60 kann der Zuschaltzeitpunkt für die in der Drehzahl steuerbaren Antriebsmotoren für die Kühlmittel gegenüber den bisherigen Ausführungen weiter nach größeren Drehzahlen des Antriebes 16 verschoben werden, so daß eine erhebliche Verbesserung des Anlagenwirkungsgrades erzielbar ist. Dadurch, daß bei einer geforderten Drehzahl Steuerwerte abhängig von einer gespeicherten Lastkennlinie, dem Ankerstrom, Erregerstrom, der Ankertemperatur und Erregertemperatur an die Schaltvorrichtung 63 gegeben werden, braucht immer nur die geringstmögliche Anzahl von Halbleiterventilen 6a, 6b, 6c in Betrieb zu sein, so daß die Gesamtanlagenverluste auf ein Minimum beschränkt werden können. Abhängig von der jeweils geforderten Drehzahl und der Lastkennlinie sowie den Ankerströme, Ankerspannungen und Ankertemperaturen werden die Anker 17, 18 in Reihe oder parallel betrieben, um die Verluste der Gesamtanlage auf einem Minimum zu halten. Dabei werden für die Einstellung der Erregerströme entsprechende Steuerwerte von der Recheneinrichtung 14 vorgegeben.

Zusätzlich zu den Steuerwerten für Zu- und Abschaltung von parallelen Halbleiterventilen für die Einstellung der Ankerspannungen, der Erregerströme sowie für die stromlose Ankerumschaltung werden im Rechner Steuerwerte für die Reihen- oder Parallelschaltung der als Gleichspannungsquelle dienenden Teilbatterien 29, 30 errechnet, bei denen sich die geringsten elektrischen Anlagenverluste ergeben. Diese Steuerwete werden vom Rechner über eine Schaltvorrichtung 61 Halbleiterschaltern 31 bis 35 für die stromlose Umschaltung der Teilbatterien 29, 30 zugeführt.

Zur weiteren Verlustverringerung enthält der Ankerstromsteller 1 für die beiden auf einer Welle 20 arbeitenden Motoren ein weiteres Halbleiterstellglied 36, das paral lel zu dem Halbleiterstellglied 2 ist und eine Verlustverringerung durch Herabsetzen der Stromwelligkeit ermöglicht. Dieses weitere Halbleiterstellglied 36 ist gleich aufgebaut wie das Halbleiterstellglied 2. Die Mittenanzapfung der Saugtransformatoren 4 der beiden Halbleiterstellglieder 2 und 36 ist mit den Enden eines dritten induktionsarmen Saugtransformators 37 mit Mittenanzapfung 38 verbunden, wobei die Mittenanzapfung 38 des dritten Saugtransformators 37 an dem Pluspol der die Anker 17, 18 speisenden Sammelschienen 39 angeschlossen ist. Beide Halbleiterstellglieder 2, 36 werden vom Rechner 14 mit gleichem Aussteuergrad aber um 90° elektrisch gegeneinander versetzt angesteuert, so daß die Ausgangsspannungen um 180° gegeneinander versetzt sind. An dem Antrieb 16 steht durch zeitliche Addition von Spannungsblöcken eine Gleichspannung an, deren Höhe vom Aussteuergrad der Halbleiterstellglieder 2, 36 bestimmt wird.

Eine zusätzliche Verlustverringerung wird dadurch erzielt, daß den Halbleiterventilen 6a und 7a jeweils weitere Halbleiterventile 6b, 6c bzw. 7b, 7c parallel geschaltet sind, so daß zwei Gruppen von steuerbaren Halbleiterventilen 6a bis 6c und 7a bis 7c gleicher Durchlaßrichtung auf einen induktionsarmen Saugtransformator 4 mit Mittenanzapfung 5 geschaltet sind. Dabei besteht jede Gruppe der Halbleiterventile aus parallel geschalteten Transistoren. Die Halbleiterventile 6a bis 6c und 7a bis 7c werden über eine Schaltvorrichtung 63 jeweils synchron getaktet, aber jede Gruppe in der Taktfrequenz um 180° gegeneinander versetzt geöffnet und geschlossen.

Von der Recheneinrichtung 14 werden auch die Erregerwicklungen 21, 22 über je einen an sich bekannten Erregerstrom-Halbleitersteller 40, 41 angesteuert.

Die Halbleiterventile 6a bis 6c und 7a bis 7c werden bei der Drehzahlsteuerung kontinuierlich im Aussteuergrad a entsprechend der geforderten Drehzahl betrieben. Durch die Verwendung der Saugtransformatoren 4, 37 wird die Taktfrequenz am Antrieb 16 vervierfacht und die Stromschwingungsbreite und damit die Stromwelligkeit auf etwa ein Sechzehntel verkleinert, so daß zusätzlich zu einer Minimierung der Verluste die tonalen Körperschallanteile der Pulsfrequenz sehr gering gehalten werden können.

Durch eine entsprechende weitere parallele Anordnung der Halbleiterventile und induktionsarme Saugtransformatoren läßt sich die Stromschwingungsbreite und damit die Stromwelligkeit und damit der Körperschallanteil sowie der Verlustanteil weiter minimieren.

Nach einer Weiterbildung der Erfindung ist zur weiteren Verringerung der Verluste eine Schalteinrichtung 50 vorgesehen, die abhängig von der vorgegebenen Solldrehzahl über die Recheneinrichtung 14 einen der Steller 2 oder 36 abschaltet, wenn nur eine geringe Antriebsleistung verlangt wird. Innerhalb des in Betrieb befindlichen Stellers wird von der Recheneinrichtung 14 ferner vorgegeben, welche parallelen Halbleiterventile bei der geforderten Leistung abgeschaltet werden können.

Bei der genannten Leistungsreduzierung oder auch bei Ausfall eines Stellers, z.B. des Stellers 36, wird der Antrieb 16 automatisch auf den noch intakten Halbleitersteller 2 geschaltet, wobei ein Schalter 47a geschlossen und der unbenutzte bzw. defekte Steller 36 durch Öffnen des zweiten Schalters 47b abgeschaltet wird. Nach dem Abschalten des Halbleiterstellers 36 kann der Antrieb allein über den Halbleitersteller 2 betrieben werden. Sodann ist die Mittenanzapfung 5 des Saugtransformators 4 mit der Sammelschiene 39 verbunden. Die beiden Gruppen der Halbleiterventile 6a bis 6c und 7a bis 7c werden in der Taktfrequenz um 180° gegeneinander versetzt geöffnet und geschlossen. Dabei wird die Taktfrequenz der Halbleiterventile am Motor verdoppelt und die Stromschwingungsbreite und damit die Stromwelligkeit gegenüber einem einfachen Halbleitersteller auf ein Viertel verkleinert, so daß durch die Taktung hervorgerufenen mechanischen Schwingungen des Motors trotz Abschaltung des zweiten Halbleiterstellers 36 noch merklich vermindert werden können. Durch die Möglichkeit, daß von den parallel angeordneten Halbleiterstellgliedern 2, 36 ein Halbleiterstellglied im unteren Drehzahlbereich abgeschaltet wird, kann eine weitere Verbesserung des Anlagenwirkungsgrades erreicht werden.

Während des Betriebes über den Halbleitersteller 2 werden von der Recheneinrichtung 14 für die Halbleiterventile 6a bis 6c und 7a bis 7c Steuerwerte für eine kontinuierliche Aussteuerung entsprechend der geforderten Drehzahl vorgegeben.

Dadurch, daß in der Recheneinrichtung 14 Steuerwerte für die Umschaltung der Teilbatterien 29, 30 bei einer vorgegebenen Drehzahl abhängig von der Spannung und/oder den Strömen der aus den Teilbatterien 29, 30 gebildeten Gleichspannungsquelle 3 und gegebenenfalls abhängig von den Zellentemperaturen, Säuredichten und den gespeicherten Entladekennlinien errechnet werden und über die Schaltvorrichtung 61 eine von diesen Steuerwerten abhängige lastlose Umschaltung vorgenommen wird, können die elektrischen Anlageverluste weiter reduziert werden, wobei durch die Schaltung mit den Saugtransformatoren die Ummagnetisierungsverluste in der Last durch die geringere Stromschwingungsbreite und damit die Stromwelligkeit stark verringert und damit die elektrischen Verluste minimiert werden.

Bei einem Antrieb für ein Elektroauto mit einer Leistung von 40 KW besitzt der in einer Schaltung angeordnete induktionsarme Saugtransformator mit geschlossenem Schnittbandkern beispielsweise eine Induktivität von etwa 5 µH.

Bezugszeichenliste

1, 2 Halbleiterstellglied

3 Gleichspannungsquelle

4 Saugtransformator

5 Mittenanzapfung

6a, b, c Halbleiterventile

7a, b, c Halbleiterventile

8 Verbindungspunkt

9, 10 Verbindungsleitung

11, 12 Freilaufdiode

13 Stützkondensator

14 Recheneinrichtung

15 Drehzahl-Sollwertgeber

16 Antrieb

17, 18 Anker

19 Antriebsrad

20 Welle

21, 22 Erregerwicklungen

23 - 27 Halbleiterschalter

29, 30 Teilbatterien

31 - 35 Halbleiterschalter

36 weiteres Halbleiterstellglied

37 dritter Saugtransformator

38 Mittenanzapfung

39 Sammelschiene

40, 41 Erregerstrom-Stellglied

47a, b Schalter

48a, b Schalter

50 Schalteinrichtung

51 Stellglied

52 - 58 Meßfühler

59, 60 Kühleinrichtung

61, 62, 63 Schaltvorrichtung

64, 65 Meßfühler

a Aussteuergrad

**Ansprüche**

1. Antriebsanordnung für elektrisch angetriebene Fahrzeuge, bei der der Anker wenigstens eines Gleichstrommotors und die zugeordnete Feldwicklung über je ein Halbleiterstellglied mit parallelen Halbleiterventilen von einer Gleichspannungsquelle gespeist werden und zur Drehzahlsteuerung eine Drehzahlregeleinrichtung und eine Erregerstromregeleinrichtung dienen, wobei der Drehzahlregeleinrichtung von einem Drehzahlgeber Sollwerte und von Meßfühlern Istwerte proportional den Ankerströmen, der Ankerspannung und der Drehzahl des Gleichstrommotors zugeführt werden und an die Erregerstromregeleinrichtung von Meßfühlern Istwerte proportional dem Erregerstrom und der Ankerspannung gegeben werden, **dadurch gekennzeichnet,**daß die Drehzahlregeleinrichtung und die Erregerstromregeleinrichtung als Recheneinrichtung (14) ausgebildet sind und dem ersten Rechner

a) von Meßfühlern (52, 53) Istwerte proportional den Spannungen und/oder Strömen der Gleichspannungsquelle sowie

b) von Meßfühlern (55, 56) Istwerte proportional den Ankertemperaturen zugeführt werden und an den zweiten Rechner

c) von Meßfühlern (57, 58) Istwerte proportional den Erregerspannungen und Erregertemperaturen gegeben werden, daß in den Rechnern (14) aus den zugeführten und gegebenenfalls gespeicherten Werten für die jeweils über den Sollwertgeber (15) vorgegebene Drehzahl Steuerwerte errechnet werden, bei denen sich ein Minimum der elektrischen Anlagenverluste ergibt, und zwar

d) Steuerwerte für die Zu- und Abschaltung von parallelen Halbleiterventilen, zumindest in Abhängigkeit von der jeweils geforderten Leistung und Drehzahl,

e) Steuerwerte für die Einstellung der Ankerspannung in Abhängigkeit von der jeweils geforderten Leistung, der Drehzahl und dem Erregerstrom,

f) Steuerwerte für die Einstellung der Erregerströme in Abhängigkeit von der Ankerspannung und/oder dem Ankerstrom, von der geforderten Leistung sowie Drehzahl und

g) Steuerwerte für die Kühlung der Halbleiterventile und des Gleichstrommotors in Abhängigkeit von den Ankerströmen bzw. den Erregerströmen

und daß diese Steuerwerte Stellgliedern (1, 40, 41, 51) und Schaltvorrichtungen (62, 63) zugeführt werden, daß gleichsinnig parallelgeschaltete Halbleiterventile (6a, 7a) des Halbleiterstellgliedes (2) ausgangsseitig auf einen induktionsarmen Saugtransformator (4) mit Mittenanzapfung (5) geschaltet sind, wobei der eingangsseitige Verbindungspunkt (8) der Halbleiterventile (6a, 7a) mit einem Pol (+) der Gleichspannungsquelle (3) und die Mittenanzapfung (5) mit einem Pol des Ankers des Gleichstrommotors verbunden ist, die Verbindungsleitungen (9, 10) der Halbleiterventile (6, 7) mit dem Saugtransformator (4) jeweils über eine Freilaufdiode (11 bzw. 12) an den anderen Pol (-) des Ankers angeschlossen sind, daß parallel zum Halbleiterstellglied (2) ein weiteres gleich ausgebildetes Halbleiterstellglied (36) angeordnet ist und die Mittenanzapfung (5) des Saugtransformators (4) der beiden Halbleiterstellglieder (2, 36) mit den Enden eines dritten induktionsarmen Saugtransformators (37) mit Mittenanzapfung (38) verbunden ist, wobei die Mittenanzapfung (38) des dritten Saugtrasnformators (37) an einen Pol (+) des Ankers angeschlossgen ist und daß die Recheneinrichtung (14)derart ausgebildet ist, daß sie für die Halbleiterventile (6, 7) Taktfrequenzsignale jeweils mit gleichem Aussteuergrad erzeugt, die aber für die beiden parallelen Halbleiterstellglieder (2, 36) um 90° elektrisch gegeneinander versetzt sind.

2. Antriebsanordnung nach Anspruch 1, **dadurch gekennzeichnet,** daß eine Schalteinrichtung (50) vorgesehen ist, die bei Abschalten oder Ausfall eines Stellgliedes den Antrieb (16) automatisch auf den noch verbleibenden Halbleitersteller schaltet.

84 P 3370 E

0 177 770

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | GB-A-2 040 085  (HITACHI)<br>* Zusammenfassung; Seite 4, Zeilen 47-90; Figuren 8, 9, 11 * | 1 | H 02 P    5/178<br>H 02 P    7/00 |
| | --- | | |
| A | FR-A-1 299 040  (COMPAGNIE GENERALE DE CONSTRUCTIONS TELEPHONIQUES)<br>* Seite 1, rechte Spalte, Zeile 3 - Seite 2, linke Spalte, Zeile 33; Figur 4 * | 1 | |
| | --- | | |
| A,D | US-A-4 363 999  (F.K. PREIKSCHAT)<br>* Spalte 7, Zeilen 13-68; Spalte 8, Zeilen 1-47; Figuren 1, 2, 2A * | 1 | |
| | --- | | RECHERCHIERTE SACHGEBIETE (Int. Cl.4) |
| A,D | GB-A-2 056 709  (CABLEFORM)<br>* Seite 1, Zeilen 76-130; Figuren 1, 4 * | 1 | H 02 P    5/00<br>H 02 M    3/00<br>H 02 P    7/00<br>B 60 L   11/00<br>B 60 L   15/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 19-12-1985 | WEIHS J.A. |